# EUROPEAN PATENT APPLICATION

(11) **EP 2 849 049 A1**
(43) Date of publication of application: **18.03.2015**
(21) Application number: 13787665.2
(22) Date of filing: 24.04.2013
(51) Int. Cl.: G06F 3/12

(54) **APPARATUS AND METHOD FOR CONTROLLING PRINTING**

(30) Priority: 07.05.2012 KR 20120047861
(71) Applicant: Fasoo. Com Co., Ltd, Seoul 121-270 (KR)
(72) Inventor: KANG, Pil-Gu, Incheon 405-260 (KR); KIM, Kwang-Hoon, Seoul 157-203 (KR)
(74) Representative: Grünecker, Kinkeldey, Stockmair & Schwanhäusser
(86) International application number: PCT/KR2013/003523
(87) International publication number: WO 2013/168915

(57) **Abstract**

Disclosed are an apparatus and a method for controlling printing. The present invention controls so that outputted data with respect to an outputted product is printed by varying the number of pages which are printed on each unit sheet. According to the present invention, by controlling so that the outputted data is printed by varying the number of pages that are printed on each of the unit sheets, printing material consumed in printing the outputted data, such as paper sheets, ink, and toner, can be saved.

## Description

### [Technical Field]

The present invention relates to a print control device and method, and more particularly, to an apparatus and method for controlling output data for a printout to be printed by varying the number of print pages per a unit paper.

### [Background Art]

Recently, various kinds of works performed within individuals or enterprises are being computerized due to developments of a computer, and various kinds of data generated by the computer is stored in the computer or is stored in an extra storage medium. Further, according to supply of a printer, there is a trend in which a user confirming contents by printing an electronic document on a paper is increasing. However, there is a problem in which a paper, a toner, an ink, etc. are wasted due to an indiscreet printing.

### [Prior Art Reference]

(Patent Reference 1) Korea Patent No. 10-0919311 (Wow soft Co.) disclosed on Sep. 21, 2009 which is Patent Reference 1 relates to a printer toner saving system, and discloses technology of providing various toner saving functions with respect to each content by classifying contents which are printed as a text, an image, a graphic, etc.

(Patent Reference 2) Korea Patent Application Publication No. 10-2010-005884 (Lee Jong Hee) disclosed on Jan. 18, 2010 which is Patent Reference 2 relates to a printer ink/toner saving process system, apparatus, and method, and discloses technology of arbitrarily controlling an amount of usage of the ink/toner by controlling an amount of injection of an ink/toner.

### [Disclosure]

### [Technical Problem]

The present invention is directed to providing a print control device and method for controlling output data for a printout to be printed by varying the number of print pages per a unit paper.

The present invention is further directed to providing a computer-readable record medium storing a program for executing a print control method for controlling output data for a printout to be printed by varying the number of print pages per a unit paper in a computer.

### [Technical Solution]

One aspect of the present invention provides a print control device, including: a printout analysis unit configured to analyze a feature of contents included in each page constituting output data for a printout in which a printing is requested by a user terminal; and a print control unit configured to control a printer to print the output data while varying the number of print pages per a unit paper using the feature of the contents of each page of the output data.

Another aspect of the present invention provides a print control method, including: analyzing a feature of contents included in each page constituting output data for a printout in which a printing is requested by a user terminal; and controlling a printer to print the output data while varying the number of print pages per a unit paper using the feature of the contents of each page of the output data.

### [Advantageous Effects]

According to a print control device and method, a print material such as a paper, an ink, a toner, etc. consumed when printing a printout can be saved by controlling output data for the printout to be printed while varying the number of print pages per a unit paper.

### [Description of Drawings]

FIG. 1 is a block diagram for describing a print control device according to one exemplary embodiment of the present invention;
FIG. 2 is a block diagram for describing a detailed construction of a print control device according to one exemplary embodiment of the present invention;
FIG. 3 is a diagram for describing an operation of printing while varying the number of print pages per a unit paper according to an exemplary embodiment of the present invention;
FIG. 4 is a flowchart for describing a print control method according to an exemplary embodiment of the present invention;
FIG. 5 is a block diagram for describing a print control device according to another exemplary embodiment of the present invention; and
FIG. 6 is a block diagram for describing a print control device according to still another exemplary embodiment of the present invention.

### [Modes of the Invention]

Hereinafter, a print control device and method according to embodiments of the present invention will be described below in more detail with reference to the accompanying drawings.

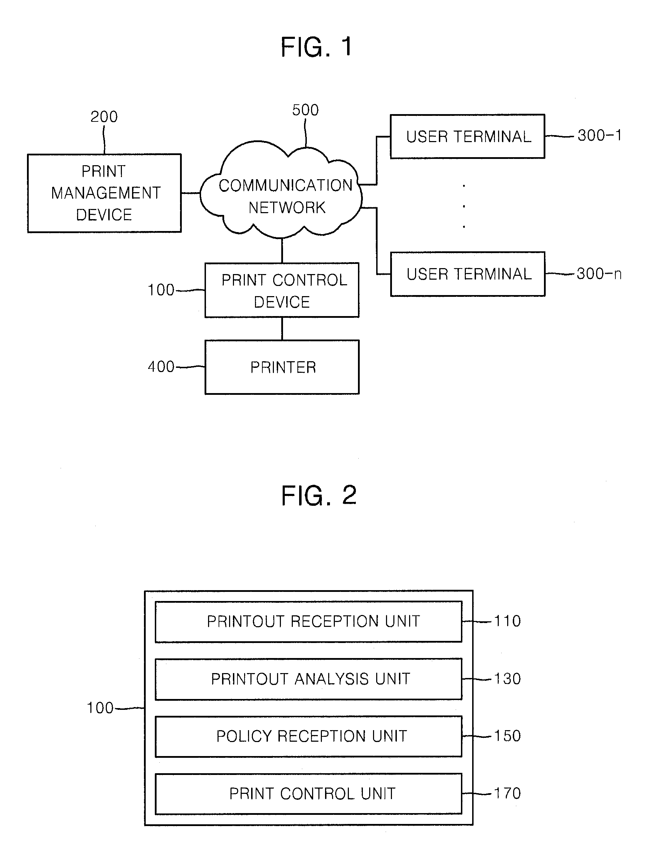

FIG. 1 is a block diagram for describing a print control device according to one exemplary embodiment of the present invention.

Referring to FIG. 1, a print control device 100 may be connected to a print management device 200 and a plurality of user terminals 300-1 to 300-n through a communication network 500. The print control device 100 may be directly connected to a printer 400.

The print control device 100 may control the printer 400 to print output data for a printout in which a printing is requested by the user terminal while varying the number of print pages per a unit paper based on a print control policy provided from the print management device 200. At this time, the print control device 100 may provide the output data corresponding to the number of varied print pages per a unit paper to the printer 400, and control the printer 400 to print the output data. Of course, the print control device 100 may directly control an operation of the printer 400, and print the output data while varying the number of print pages per a unit paper.

The print management device 200 may provide a print control policy which is previously set by a manager to the print control device 100.

The user terminals 300-1 to 300-n may request a print on the output data for the printout according to a user's operation. The user terminals 300-1 to 300-n may be a television, a computer, a tablet personal computer (PC), a personal digital assistant (PDA), a portable multimedia player (PMP), a mobile phone, a smart phone, a navigation device, etc.

The printer 400 may be an output device for printing information which is processed by the computer in a form capable of being seen by human's eyes. The printer 400 may be a thermal transfer printer, an ink-jet printer, a laser printer, etc.

The communication network 500 may be a data communication network such as a local area network (LAN), a metropolitan area network (MAN), a wide area network (WAN), the Internet, etc., and also be a broadcast network, a telephone network, etc. Further, the communication network 500 may be a wired or wireless network, and include every communication method.

Meanwhile, the print control device 100 may receive the print control policy from the print management device 200, but is not limited thereto. For example, the print control policy may be previously stored in the print control device 100.

FIG. 2 is a block diagram for describing a detailed construction of a print control device according to one exemplary embodiment of the present invention.

Referring to FIG. 2, a print control device 100 may include a printout reception unit 110, a printout analysis unit 130, a policy reception unit 150, and a print control unit 170.

The printout reception unit 110 may receive output data in which a printing is requested by the user terminal 300-1.

The printout analysis unit 130 may analyze a feature of contents included in each page constituting the output data received from the printout reception unit 110. Here, the feature of the contents may be a character size and the number of lines which constitute a text, and a ratio of the text with respect to an entire area of a page when the contents are the text, and may be a ratio of an image with respect to the entire area of the page when the contents are the image.

The policy reception unit 150 may receive the print control policy from the print management device 200. Here, the print control policy may have information in which a feature of contents and a print saving operation are mapped with respect to each saving policy. Here, the print saving operation may include the maximum number of pages capable of being printed in a unit paper, a print density, a print color, a reduced print, etc. For example, the feature of the contents and the print saving operation are mapped with respect to each saving policy in the print control policy as shown in the following Table 1.

**[Table 1]**

| **Saving Policy Name** | **Feature of Contents** | | | **Print Saving Operation** |
|---|---|---|---|---|
| **Saving Policy** #1 | Text | Ratio which is equal to or more than 50% | Character size which is equal to or larger than 24 points | Maximum 4 pages per a unit paper |
| **Saving Policy** #2 | | | Character size of 12 to 24 points | Maximum 2 pages per a unit paper |
| **Saving Policy** #3 | | | Character size which is smaller than 12 points | Maximum 1 page per a unit paper |
| **Saving Policy** #4 | | Ratio which is less than 50% | Character size which is equal to or larger than 24 points | Maximum 2 pages per a unit paper |
| **Saving Policy** #5 | | | Character size which is smaller than 24 points | Maximum 1 page per |
| | | | | a unit paper |
| **Saving Policy** #6 | Image | Ratio which is equal to or more than 50% | | Maximum 4 pages per a unit paper |
| **Saving Policy** #7 | | Ratio of 25% to 50% | | Maximum 2 pages per a unit paper |
| **Saving Policy** #8 | | Ratio which is less than 25% | | Maximum 1 page per a unit paper |

Meanwhile, the print control policy shown in Table 1 includes only contents regarding the maximum number of print pages per a unit paper, but this is only an example, and the print saving operation may be constituted by a single operation or a combination of two or more operations among the maximum number of pages, the print density, the print color, and the reduced print.

The print control unit 170 may control the printer 400 to print the output data while varying the number of print pages per a unit paper using the feature of the contents of each page of the output data analyzed by the printout analysis unit 130 based on the print control policy received from the policy reception unit 150. That is, the print control unit 170 may acquire the saving policy of each page of the output data using the feature of the contents of each page of the output data from the print control policy. Further, the print control unit 170 may vary the number of print pages per a unit paper according to the print saving policy of each page of the acquired output data.

For example, the print control unit 170 may control the printer 400 to print the output data of a total of 6 pages on a total of 4 unit papers while varying the number of print pages per a unit paper according to the saving policy of each page of the acquired output data as shown in the following Table 2.

**[Table 2]**

| **Output Data** | **Feature of Contents** | **Saving Policy Name** | **Unit Paper** |
|---|---|---|---|
| Page 1 | Text/Ratio which is equal to or more than 50%/Character size which is smaller than 12 points | Saving Policy #3 (Maximum 1 page per a unit paper) | First Unit Paper |
| Page 2 | Image/Ratio which is equal to or more than 50% | Saving Policy #6 (Maximum 4 pages per a unit paper) | Second Unit Paper |
| Page 3 | Text/Ratio which is less than 50%/Character size which is equal to | Saving Policy #4 (Maximum 2 pages per a unit paper) | |
| | or larger than 24 points | | |
| Page 4 | Text/Ratio which is equal to or more than 50%/Character size of 12 to 24 points | Saving Policy #2 (Maximum 2 pages per a unit paper) | Third Unit Paper |
| Page 5 | Image/Ratio of 25 to 50% | Saving Policy #7 (Maximum 2 pages per a unit paper) | |
| Page 6 | Text/Ratio which is less than 50%/Character size which is smaller than 24 points | Saving Policy #5 (Maximum 1 page per a unit paper) | Fourth Unit Paper |

Here, according to the saving policy corresponding to 'page 2', the maximum number of print pagers per a unit paper may be 4, but according to the saving policy corresponding to 'page 3', the maximum number of print pages per a unit paper may be 2. Accordingly, the print control unit 170 may control to print 'pages 2 and 3' on one unit paper.

Meanwhile, when an image and a text are included in one page constituting output data, the print control unit 170 may use a saving policy having a low saving degree between the saving policy corresponding to the image and the saving policy corresponding to the text as the saving policy corresponding to a corresponding page. For example, the print control unit 170 may use a smaller number between the maximum number of print pages per a unit paper corresponding to the image and the maximum number of print pages per a unit paper corresponding to the text as the maximum number of print pages corresponding to a corresponding page.

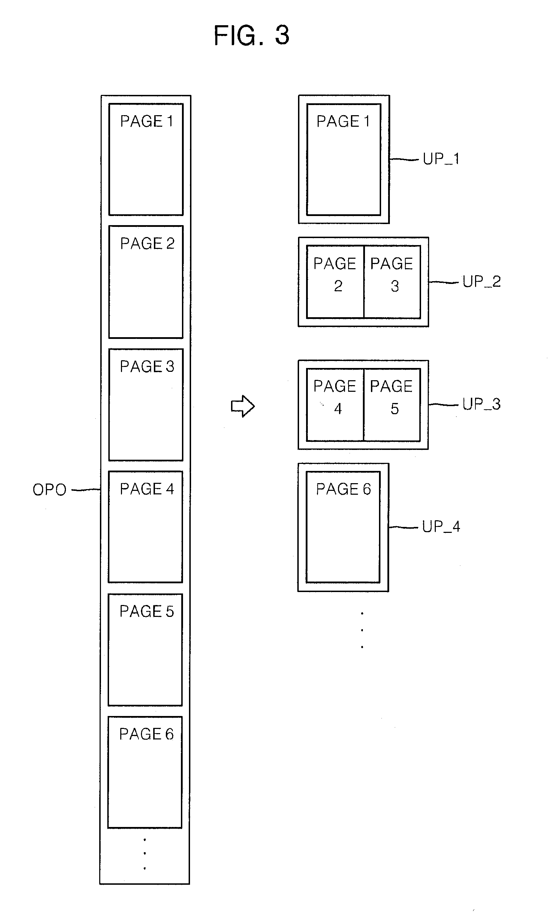

FIG. 3 is a diagram for describing an operation of printing while varying the number of print pages per a unit paper according to an exemplary embodiment of the present invention.

Referring to FIG. 3, the print control unit 170 may print one page on each of a first unit paper UP_1 and a fourth unit paper UP_4 and two pages on each of a second unit paper UP_2 and a third unit paper UP_3 according to the saving policy of each page of the output data OPO acquired using the feature of the contents of each page of the output data OPO. Accordingly, 'page 1' of the output data OPO may be printed on the first unit paper UP_1, 'pages 2 and 3' of the output data OPO may be printed on the second unit paper UP_2, 'pages 4 and 5' of the output data OPO may be printed on the third unit paper UP_3, and 'page 6' of the output data OPO may be printed on the fourth unit paper UP_4.

As such, a print material such as a paper, an ink, a toner, etc. consumed when printing the output data can be saved by controlling the output data to be printed while varying the number of print pages per a unit paper.

Further, the print control unit 170 may control the printer 400 to print by reducing a size of the output data on a unit paper having a smaller size than a predetermined unit paper. For example, when a size of a predetermined unit paper with respect to the output data is 'A3', the print control unit 170 may print the output data by reducing the size of the output data on the unit paper of 'A4' size. When the size of a predetermined unit paper with respect to the output data is 'A2', the print control unit 170 may print the output data by reducing the size of the output data on the unit paper of 'A3' or 'A4' size. At this time, the print control unit 170 may control whether to perform the reduced print on each unit paper using the feature of the contents of each page of the output data based on the print control policy received from the policy reception unit 150. That is, the print control unit 170 may acquire the saving policy of each page of the output data using the feature of the contents of each page of the output data from the print control policy. The print control unit 170 may control to print by reducing the output data according to the saving policy of each page of the acquired output data. As such, a print material such as an ink, a toner, etc. consumed when printing the output data can be saved by controlling to print by reducing the output data.

Further, the print control unit 170 may control the printer 400 to print the output data in a predetermined print density. At this time, the print control unit 170 may control the printer 400 to print the output data while varying a print density of each unit paper using the feature of the contents of each page of the output data based on the print control policy received through the policy reception unit 150. That is, the print control unit 170 may acquire the saving policy of each page of the output data from the print control policy using the feature of the contents of each page of the output data. Also, the print control unit 170 may vary the print density of each unit paper according to the saving policy of each page of the acquired output data. Accordingly, the print material such as an ink, a toner, etc. consumed when printing the output data can be saved by varying the print density of the output data.

Moreover, the print control unit 170 may control the printer 400 to print the output data in a predetermined print color. For example, the print control unit 170 may control so that the output data in color is printed in black and white. At this time, the print control unit 170 may control the printer 400 to print the output data while varying a print color of each unit paper using the feature of the contents of each page of the output data based on the print control policy received through the policy reception unit 150. That is, the print control unit 170 may acquire the saving policy of each page of the output data from the print control policy using the feature of the contents of each page of the output data. The print control unit 170 may vary the print color of each unit paper according to the saving policy of each page of the acquired output data. Accordingly, a print material such as an ink, a toner, etc. consumed when printing the output data can be saved by varying the print color of the output data.

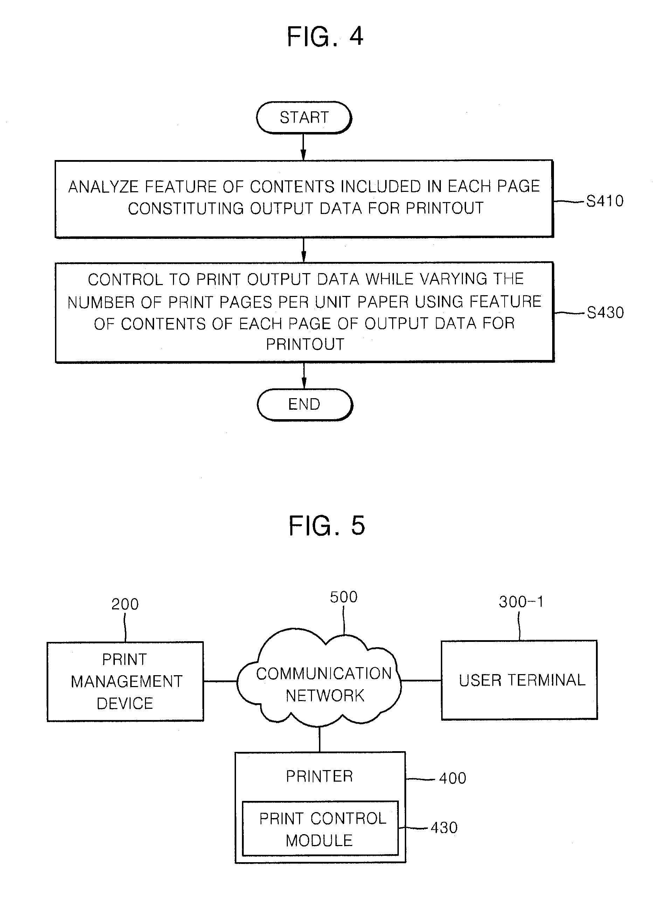

FIG. 4 is a flowchart for describing a print control method according to an exemplary embodiment of the present invention.

The print control device 100 may analyze a feature of the contents which are included in each page constituting the output data for a printout (S410). Next, the print control device 100 may control to print the output data while varying the number of print pages per a unit paper using the feature of the contents of each page of the output data based on the print control policy received from the print management device 200 (S430). That is, the print control device 100 may acquire the saving policy of each page of the output data from the print control policy using the feature of the contents of each page of the output data. Further, the print control device 100 may vary the number of print pages per a unit paper according to the saving policy of each page of the acquired output data.

At this time, the print control device 100 may control the printer 400 to print by reducing a size of the output data on a unit paper having a smaller size than the predetermined unit paper with respect to the output data based on the print control policy. Further, the print control device 100 may control the printer 400 to print the output data in a predetermined print density, or in a predetermined print color. At this time, the print control device 100 may control the printer 400 to print the output data while varying the print density or the print color of each unit paper according to the acquired saving policy of each page using the feature of the contents of each page of the output data.

FIG. 5 is a block diagram for describing a print control device according to another exemplary embodiment of the present invention.

Since a print control module (430 of FIG. 5) according to another exemplary embodiment of the present invention may be substantially equal to the print control device (100 of FIG. 1) according to one exemplary embodiment of the present invention, detailed descriptions will be omitted and only different portions will be described.

The print control device (100 of FIG. 1) according to one exemplary embodiment of the present invention may be a device which is independent from the printer (400 of FIG. 1), but the print control module (430 of FIG. 5) according to another exemplary embodiment of the present invention may be implemented by software such as an application, etc. and installed in the printer (400 of FIG. 5), or may be implemented by hardware such as a chip, etc. and installed in the printer (400 of FIG. 5).

That is, the print control module (430 of FIG. 5) may analyze the feature of the contents included in each page constituting the output data. Further, the print control module (430 of FIG. 5) may control to print the output data while varying the number of print pages per a unit paper using the feature of the contents of each page of the output data based on the print control policy. Of course, the print control module (430 of FIG. 5) may also perform a print control operation of controlling a reduced print, a print density, a print color, etc.

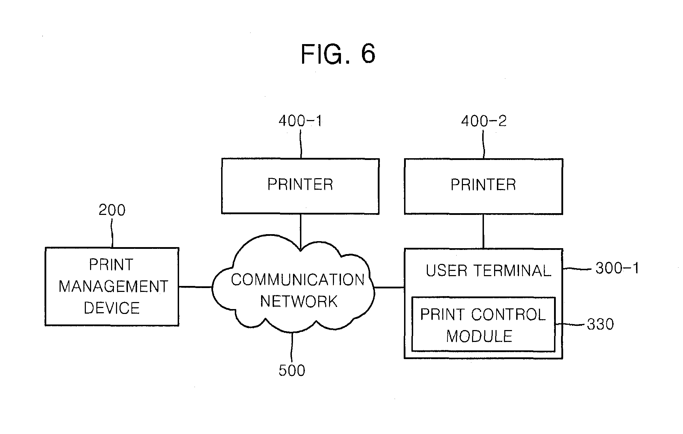

FIG. 6 is a block diagram for describing a print control device according to still another exemplary embodiment of the present invention.

Since a print control module (330 of FIG. 6) according to still another exemplary embodiment of the present invention may be substantially equal to the print control module (430 of FIG. 5) according to another exemplary embodiment of the present invention, detailed descriptions will be omitted, and only different portions will be described.

The print control module (430 of FIG. 5) according to another exemplary embodiment of the present invention may be installed in the printer (400 of FIG. 5), but the print control module (330 of FIG. 6) according to still another exemplary embodiment of the present invention may be implemented by software such as an application, etc. and installed in the user terminal (300-1 of FIG. 6), or may be implemented by hardware such as a chip, etc. and installed in the user terminal (300-1 of FIG. 6)

The present invention may be implemented as computer-readable codes in a computer-readable record medium. The computer-readable record medium may include all types of record media in which computer-readable data is stored. Examples of the computer-readable record medium may include a ROM, a RAM, a CD-ROM, a magnetic tape, a floppy disk, an optical data storage, etc. Further, the record medium may be implemented in the form of a carrier wave (transmission through the Internet). In addition, the computer-readable record medium may be distributed to computer systems over a network, in which computer-readable codes may be stored and executed in a distributed manner.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A print control device, comprising:
a printout analysis unit configured to analyze a feature of contents included in each page constituting output data for a printout in which a printing is requested by a user terminal; and
a print control unit configured to control a printer to print the output data while varying the number of print pages per a unit paper using the feature of the contents of each page of the output data.

2. The print control device according to claim 1, wherein the feature of the contents is at least one of a character size, the number of lines, and a ratio of a text with respect to an entire area of a page when the contents are the text, and is a ratio of an image with respect to the entire area of the page when the contents are the image.

3. The print control device according to claim 1, wherein the print control unit varies the number of print pages per the unit paper by comparing the feature of the contents of each page of the output data and a predetermined threshold value.

4. The print control device according to claim 1, wherein the print control unit controls the printer to print by reducing a size of the output data on a unit paper having a smaller size than a predetermined unit paper with respect to the output data.

5. The print control device according to claim 1, wherein the print control unit controls the printer to print the output data in a predetermined print density, or in a predetermined print color.

6. The print control device according to claim 5, wherein the print control unit controls the printer to print the output data while varying the print density or the print color of each unit paper through the feature of the contents of each page of the output data.

7. The print control device according to claim 1, wherein the print control unit controls the printer to print the output data according to a saving policy of each page of the output data acquired using the feature of the contents of each page of the output data from a print control policy in which the feature of the contents and information of a print saving operation with respect to each saving policy are mapped.

8. The print control device according to claim 7, wherein the print control unit receives the print control policy from a print management device.

9. A print control method, comprising:
analyzing a feature of contents included in each page constituting output data for a printout in which a printing is requested by a user terminal; and
controlling a printer to print the output data while varying the number of print pages per a unit paper using the feature of the contents of each page of the output data.

10. The print control method according to claim 9, wherein the feature of the contents is at least one of a character size, the number of lines, and a ratio of a text with respect to an entire area of a page when the contents are a text, and is a ratio of an image with respect to the entire area of the page when the contents are an image.

11. The print control method according to claim 9, wherein the controlling of the printer varies the number of print pages per the unit paper by comparing the feature of the contents of each page of the output data and a predetermined threshold value.

12. The print control method according to claim 9, wherein the controlling of the printer controls the printer to print by reducing a size of the output data on a unit paper having a smaller size than a predetermined unit paper with respect to the output data.

13. The print control method according to claim 9, wherein the controlling of the printer controls the printer to print the output data in a predetermined print density, or in a predetermined print color.

14. The print control method according to claim 13, wherein the controlling of the printer controls the printer to print the output data while varying the print density or the print color of each unit paper through the feature of the contents of each page of the output data.

15. The print control method according to claim 9, wherein the controlling of the printer controls the printer to print the output data according to a saving policy of each page of the output data acquired using the feature of the contents of each page of the output data from a print control policy in which the feature of the contents and information of a print saving operation with respect to each saving policy are mapped.

16. The print control method according to claim 15, wherein the print control policy is provided from a print management device.
